Europäisches Patentamt

**European Patent Office**

Office européen des brevets

(11) Publication number: **0 053 813**
**B1**

(12) **EUROPEAN PATENT SPECIFICATION**

(45) Date of publication of patent specification: **26.02.86**

(51) Int. Cl.⁴: **B 67 D 1/02,** B 67 D 1/10, B 65 D 77/06

(21) Application number: **81110130.2**

(22) Date of filing: **04.12.81**

(54) **Beverage dispensing system.**

<table>
<tr><td>

(30) Priority: **10.12.80 GB 8039591**

(43) Date of publication of application:
**16.06.82 Bulletin 82/24**

(45) Publication of the grant of the patent:
**26.02.86 Bulletin 86/09**

(84) Designated Contracting States:
**AT BE CH DE FR GB IT LI LU NL SE**

(56) References cited:
**DE-A-2,423 909**
**FR-A-2 384 134**
**GB-A- 899 732**
**GB-A-2 002 324**
**US-A-3 199 742**

</td><td>

(73) Proprietor: **Cadbury Schweppes Limited**
**1-4 Connaught Place**
**London, W2 2EX (GB)**

(72) Inventor: **Brown, George**
**Cadbury Schweppes Ltd 1-4 Connaught Place**
**London W2 2EX (GB)**

(74) Representative: **Denmark, James**
**c/o Bailey Walsh & Co. 5 York Place**
**Leeds LS1 2SD Yorkshire (GB)**

</td></tr>
</table>

Courier Press, Leamington Spa, England.

## Description

This invention relates to the dispensing of liquids, and the invention may be applied to the in-home or commercial dispensing of drinks.

The invention can be applied to the dispensing of carbonated drinks or uncarbonated drinks from a counter for example in a cafeteria or a shop or some other location by means of conventional dispensing heads or by means of a specially adapted machine for the dispensing of drinks.

The invention has particular applicability to drinks which are "mixed" in that they comprise a flavouring syrup and water, these two constituents being mixed only when the drink is dispensed, but being kept separate until dispensing takes place. These mixed drinks may be carbonated or uncarbonated, and when the drink is carbonated, it is usual for the water to be carbonated, but, the present invention is not to be considered as being limited thereto.

In an in-home situation, there may be a dispensing machine adapted to dispense water and flavouring syrup in a predetermined ratio upon demanding of the machine to dispense a drink. Such machines more recently have been adapted for dispensing carbonated drinks, and in such machines a carbon dioxide cylinder in the machine serves to propel the syrup and water to the dispensing head.

In larger installations, for example in cafeterias and bars, there may be a large water tank, a carbonator, a large carbon dioxide cylinder which is used to carbonate the water, and a syrup tank, these components being coupled to the dispensing head at the bar or counter top. It is usual for the system to include some form of refrigeration means for keeping the syrup and/or water chilled.

The present invention makes use of a peristaltic pump for the delivering of liquid of the beverage from a disposable package which provides good hygienic dispensing conditions.

It has already been known from GB—A—2002324 to dispense a beverage concentrate from a disposable package using a peristaltic pump, but the design of package requires the use of a pump of conventional construction comprising a rotor and a reaction surface between which a flexible tube of the package through which the concentrate is pumped, is used.

Also known, but not in connection with the dispensing of beverage liquids is a peristaltic pump as described in FR—A—2384134 which comprises a rotor and a reaction surface between which a pumping tube section of flexible material is located; the tube section is push fitted onto support collars enabling the tubes to be changed and replaced when worn, and the new tubes readily to be repositioned in the pump.

The present invention concerns a beverage dispensing system which will facilitate interchange of especially the syrup tanks with the minimum of difficulty, and under conditions of maximum hygiene, because in these dispensing systems involving concentrated syrup, the dispensing conditions must be maintained in the best condition from the point of view of hygiene. Concentrated syrup in contact with air tends to crystallise, which encourages bacterial growth. Although the invention has particular application in a mixed drink dispenser, it is conceived that it can be utilised for dispensing a drink which has been pre-mixed i.e. which comprises the flavouring and water mixed in the predetermined ratio prior to the dispensing step.

The present invention is concerned with a disposable package containing the liquid to be dispensed. It is felt desirable that a disposable package system is of considerable interest insofar as the invention is that the disposable packages could be sealed units easily insertable in the system and easily replaceable. This arrangement would also provide for the effective control of quality of the liquid dispensed.

According to a first aspect of the invention there is provided a disposable package for use in a beverage dispensing system, the package containing a liquid, and further comprising a package outlet and a one-piece flexible tube unit having one end connected to said package outlet and at the other end having a dispensing outlet, characterised in that the tube unit has spaced inwardly of the ends thereof two spaced apart integral shoulders which define therebetween a pumping tube section and which are for quick release coupling with a mounting means associated with a peristaltic pump so that said pumping section can be tensioned without the need for a reaction surface for the pump rotor. This aspect of the invention is extremely valuable, insofar as by suitably designing the dispensing tube, it can be arranged that a particular portion of the dispensing tube will be positioned in relation to the means, namely the peristaltic pump, for driving the liquid from the package, and the said section can be made of predetermined flexibility and length. In use, the shoulders would be arranged in relation to the mounting means so that the section of dispensing tube between the shoulders would be stretched around the peristaltic pump rotor under tension, ensuring that during rotation of the peristaltic pump rotor, liquid would be pumped to the dispensing point. As well as this arrangement providing that the dispensing tube can be accurately and quickly positioned, additionally it is not necessary to have a backing plate on the peristaltic pump against which the peristaltic pump rotor has to react, as has been provided in some prior art arrangements.

In a further aspect of the invention, there is provided a beverage dispensing system comprising a disposable package, a peristaltic pump with associated mounting means for a pumping tube section, and a dispensing head, said disposable package comprising a package outlet, and a one-piece flexible tube unit having one end connected to said package outlet and at the other end having a dispensing outlet connected to the dispensing head, characterised in that the tube unit has spaced inwardly of the ends thereof two spaced apart integral shoulders which define therebetween a pumping tube section and which are quick-release coupled with the mounting means associated with said peristaltic pump so that said pumping section is tensioned around the pump rotor with predetermined tension, and the peristaltic pump is devoid of any rotor reaction surface.

The disposable package may contain a beverage concentrate and the system may include a supply of carbonated water coupled to the dispensing head, so that when the actuating means is actuated, the concentrate and water flow in a predetermined ratio in order to provide a beverage.

In commercial beverage dispensing systems, it will be normal to provide that only replacement syrup is contained in a disposable package, as the water supply will be permanently available from the mains, but it is possible for a small transportable in-home unit to provide that the syrup and the water are in disposable packages, so that a suitably designed machine can be used in locations, for example out of doors, where no drinkable water supply is available.

The said peristaltic pump may be adapted to be driven by a small electric motor, or in other applications, such as an in-home application, the peristaltic pump rotor means may be adapted to be rotated by hand.

By the utilisation of a sealed disposable package, maximum hygiene conditions can be maintained as the package remains sealed and when empty is simply disconnected and thrown away. There is no collection of used containers, and there is no cleaning and washing of used syrup containers such as occurs at present, in commercial installations.

Embodiments of the present invention will now be described, by way of example, with reference to the accompanying diagrammatic drawings, wherein:

Fig. 1 is a sectional elevation illustrating a package according to one embodiment of the present invention, when operatively connected to a peristaltic pump;

Fig. 2 shows, in perspective elevation, the peristaltic pump shown in Fig. 1, the package discharge tube and the syrup supply pipe;

Fig. 3 is a perspective view of a package according to another embodiment of the invention;

Fig. 4 is a perspective elevation of the package shown in Fig. 3, when installed in a beverage dispensing system;

Fig. 5 is a sectional side elevation showing how the flexible bag outlet is locked in position in the casing;

Fig. 6 is a diagrammatic illustration of the elements of the beverage dispensing system, employing a package as shown in Figs. 3 to 5;

Fig. 7 is a sectional elevation of part of the dispensing head as shown in Fig. 6; and

Fig. 8 is a sectional elevation, to enlarged scale, of the end of the dispensing tube of the package shown in Figs. 3 to 5, prior to severing of same.

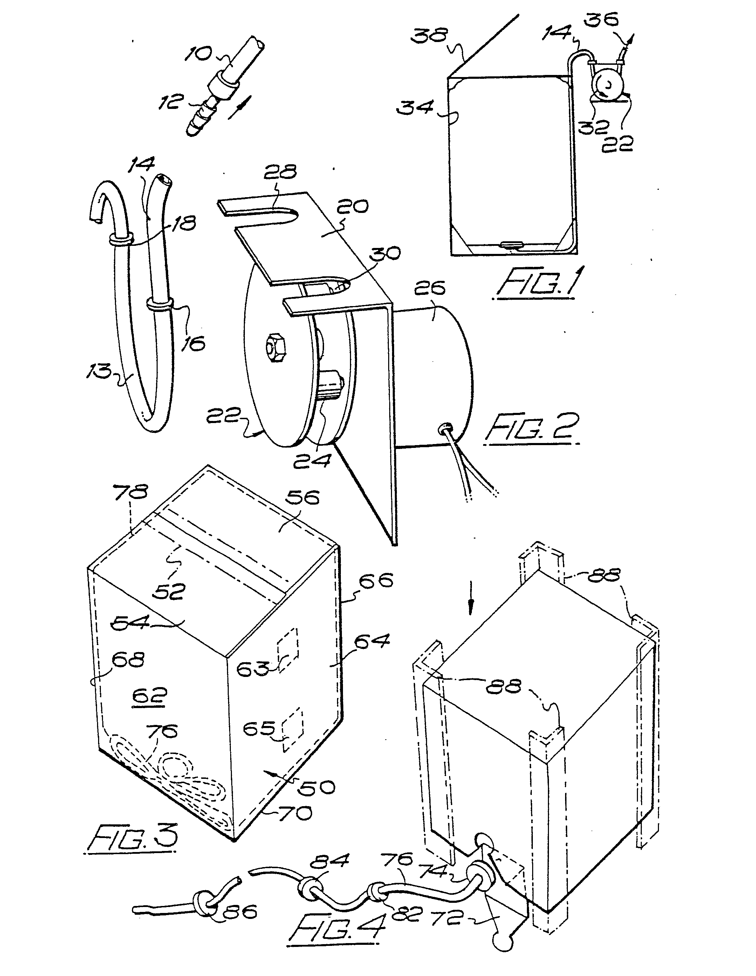

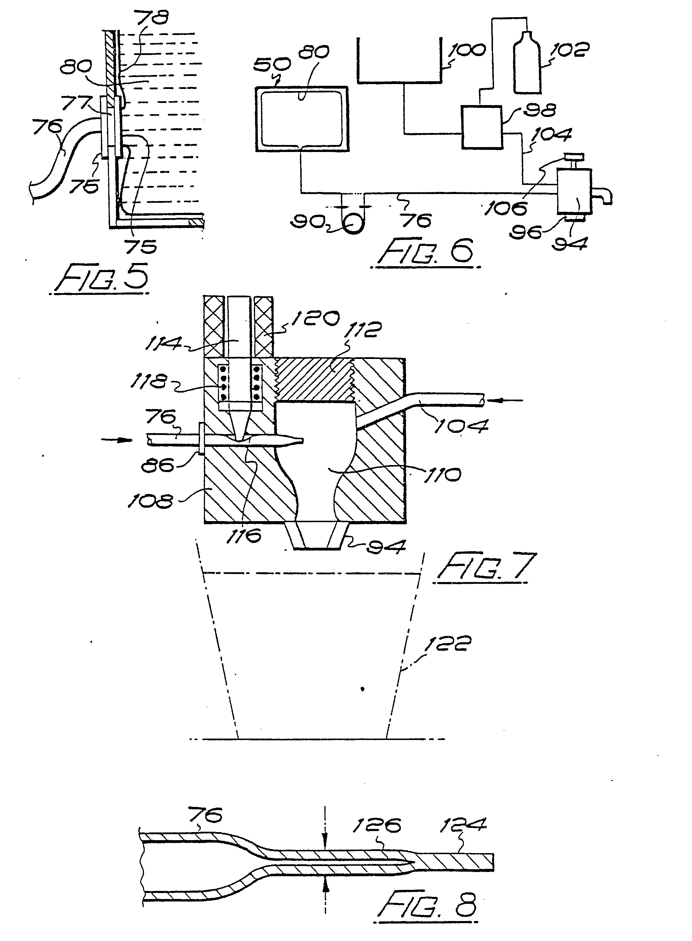

Referring to Figs. 1 and 2 of the drawings, the following description relates to a commercial carbonated beverage dispensing system which includes a dispensing head provided with a lever or button for actuation to dispense a drink. On such actuation, syrup and carbonated water (chilled) are dispensed to provide the final beverage in a drinking vessel held under an outlet nozzle at the dispensing head. The syrup and water may be mixed prior to issuing from the outlet or they may be mixed in the cup. The water line from the mains to the dispensing head is conventional and may include a storage tank, a refrigeration unit and carbonating unit, in any combination or arrangement.

The syrup container and the syrup line embody aspects of the present invention. A syrup supply line 10 (Fig. 2) leads to the dispensing head. This dispensing line 10 may be arranged to lie adjacent the refrigeration means in order that syrup therein is chilled. The other end of the line 10, as shown in Fig. 2, is provided with a coupling nipple 12 for the quick connection of the line 10 to the syrup container according to the invention. The outlet tube 14 of the said container is shown in Fig. 2. This tube 14 is of flexible plastics material, and the portion shown in Fig. 2 towards the free end is provided with support collars or flanges 16 and 18 which respectively are for engaging the top of the support plate 20 of a peristaltic pump assembly, also shown in Fig. 2. The peristaltic pump assembly comprises a rotor means 22 provided with at least two rollers 24 for engaging the portion 13 of the tube 14 between the collars 16 and 18 in use, in order to effect pumping of syrup through the tube 14 and into the tube 10, and eventually to the dispensing head. The pump assembly also includes an electric motor 26 which is drivingly coupled to the rotor 22 in order to rotate same. To couple the portion 13 of the tube 14 operatively to the peristaltic pump assembly, the collars 16 and 18 are located above the plate 20 by slipping the tube 14 into the slots 28 and 30 in the said plate 20 and by stretching the portion 13 of flexible tube between the collars 16 and 18 around the rotor 22 so that this portion is engaged, by the peristaltic rollers 24. This method of coupling a section of the tube between collars 16 and 18 provides an extremely desirable result. In the first place, it is not necessary to provide any reaction surface for the peristaltic pump rotor, which is the case with the conventional peristaltic pumping arrangements, and secondly, because the section 13 between collars 16 and 18 is stretched around the rotor with tension related to the sizing of the rotor, the positioning of plate 20 and the length of section between collars 16 and 18, automatically a particular rate of dispensing fluid is achieved. Furthermore, fitting of the dispensing tube to the peristaltic pump is extremely simple and effective.

In Fig. 1, the rotor 22 of the peristaltic pump assembly is shown, with the tube 14 in operative position in relation thereto. The rotor 22 is adapted to be rotated in the direction of arrow 32 in Fig. 1, when operational, to pump syrup from a flexible bag container 34 to the dispensing head as indicated by the arrow 36 in Fig. 1.

The container illustrated in Fig. 1 as well as including the plastic bag 34, which is flexible and collapsible, and contains in this case 13.6 litres (three gallons) of concentrated syrup, includes a casing 38 which may be a cardboard casing or a permanent stand or wire frame to support the flexible and collapsible bag 34. The bag is provided with only one outlet being the outlet through the tube 14, and this tube is long enough as shown in Fig. 1, to extend from the bottom end of the bag 34, up to the top end and then round the peristaltic pump rotor. The peristaltic pump assembly may be mounted on the stand or frame for the disposable syrup package in order to ensure it has the correct positional relationship for the location of the portion 13 of the tube 14 which extends around the peristaltic pump rotor 22.

The bag 34 is in fact inverted into the position shown in Fig. 1, which is the in use position.

It will be appreciated that as the syrup within the bag 34 is used up, so the bag will collapse until, when there is no syrup left, the bag will be completely collapsed and the package can be thrown away and a replacement container assembly comprising a bag and long tube can be inserted quickly and easily. Each unit comprising a plastic bag and tube may be provided with a non-return valve to make the pack pilfer proof.

Instead of being supported by an outer case, stand or frame, the bag can be adapted to be suspended by hanging in the in use position.

At least the portion of the tube 14 which engages the peristaltic pump rotor should be of a flexible material, such as rubber, suitable for pumping by a peristaltic method.

Referring to Figs. 3 to 5, an alternative embodiment of a package according to the invention is shown, and the package comprises an outer case 50 of cut and creased sheet material such as cardboard, which is folded and sealed to define a cubic shape, the top of the case being sealed by means of adhesive tape 52, or the like which overlaps top closure flaps 54 and 56. The flaps 54 and 56 overlap inner closure flaps, the said flaps being hinged to the top edges of the respective sides 62, 64, 66 and 68 of the outer case. In side 64 of the outer casing, there are defined window panels 63 and 65 which can be removed to expose the outer surface of the flexible bag. These are used when the flexible bag is of transparent material, so that by viewing through the resulting window apertures, a user can determine the level of syrup concentrate in the flexible bag and can guess when it will be necessary in the future to replace the concentrate. It will be more usual however, to use a plastic metallised film to keep out ultraviolet light and oxygen penetration. Partly in the base 70 and partly in side 62 of the outer case there is defined a break-open key hole panel 72 by means of slits or other lines of weakening and panel 72 is shown in open condition in Fig. 4. To gain access to the interior of the package, the portion panel is simply torn back as indicated in Fig. 4. This tearing back of portion 72 exposes a flexible dispensing tube 76 integral with a sealed inner flexible bag 78 containing the liquid 80 (Fig. 5) to be dispensed. The tube 76 as shown in Fig. 3 is stored in the casing 50 and is connected to the bag 78 by means of a pilfer proof connection 74. The tube 76 is provided with collars or flanges 82 and 84 which serve the same function as the collars 16 and 18 of the Fig. 1 embodiment, but additionally the tube 76 has at its outer end, a further collar 86. The said tube 76 and collars 82, 84 and 86 are integral and are fabricated from the same flexible material which may be rubber or the like.

Fig. 4 shows the disposable package in position in a stand 88 of the dispensing system. The top of the casing 50 is usually kept closed to prevent the top of the bag 78 from being it is punctured.

Fig. 5 shows that the connector 74 comprises a pair of large diameter collars 75 between which is a neck 77. The neck 77 fits frictionally in the round portion of the keyhole slot left by tearing away the case portion 72 so that the connector 74 remains firmly in position.

Referring now to Fig. 6, this figure shows diagrammatically how the package 50 is positioned in a dispensing system for dispensing a beverage which is made up of concentrate 80 and carbonated water. The tube 76 is shown as operatively connected to a peristaltic pump 90, in the same manner as described in relation to Figs. 1 and 2, and the free end of the tube 76 is located in a dispensing head 94 from which there is an outlet 96 for the mixed beverage.

Also connected to the head is a supply of carbonated water from a carbonator 98. The carbonator 98 receives water from a supply tank 100 and carbonating gas from a carbon dioxide vessel 102. The carbonated water passes from carbonator 98 to the dispensing head 94 through supply pipe 104, and the dispensing head is provided with an actuator button 106, depression of which results in dispensing of a carbonated beverage from the dispensing nozzle 96. The dispensing head 94 may have adjusting means, such as screws for varying the rate of flow of syrup and/or water.

Referring now to Fig. 7, in which a diagrammatic sectional elevation of the dispensing head is shown, the head comprises a body 108, including a mixing chamber 110, the lower end of which opens to atmosphere through dispensing nozzle 94, the top of which is closed by means of a plug 112. The pipe 104 projects into the chamber 110 as does the end of the dispensing tube 76. The extent to which the end of tube 76 projects into chamber 110 is dictated by the collar 86 abutting the body 108 as shown in Fig. 7. The body houses a reciprocable armature 114 the end of which defines a nose 116 which pinches the end of the dispensing tube 76 as shown and prevents flow of concentrate therethrough. The armature 114 is spring loaded to the position shown by means of a compression spring 118, and another portion of the armature 114 is surrounded by an electro-magnetic coil 120. The coil 120 is actuated when the button 106 is depressed in order to lift the nose 116 from the tube 76 and to permit the flow of concentrate therethrough into the chamber 110 where the concentrate is mixed with carbonated water supplied at a predetermined rate so as to provide a mixture which is a palatable drink and which is caught in for example a drinking cup 122. Depression of the button 106 also causes rotation of the rotor of the peristaltic pump 90 so that the syrup is driven through the dispensing tube 76. The depression of the button 106 may also cause release of a valve or the like controlling flow of carbonated water through the pipe 104. It is usual for the carbonated water to be driven to the dispensing head using the pressure of the carbon dioxide gas supply 102.

If reference is made to Fig. 8 it will be shown that the end of the tube 76 when the disposable package is supplied, is in fact sealed in the region 124, and in an adjacent region 126, the sides of the tube 76 are flat, but are not internally sealed. To put the disposable package into use therefore, it is necessary to sever the tube 76 at the end in the region 126 so that the end of the dispensing tube acts like a flap or clapper valve, preventing back flow of concentrate along the tube 76, and also mitigating against any dripping of the concentrate when there is no dispensing of beverage taking place. This arrangement also inhibits the formation of residue on the extremity of the dispensing tube 76.

When the concentrate in a disposable package has been consumed, it is an extremely simple matter to fit a replacement package. To do this, the user simply breaks open the base of the outer case, pulls out the dispensing tube 76, positions the section of the dispensing tube 76 between collars 82 and 84 around the peristaltic pump rotor in the manner as described in relation to Figs. 1 and 2, cuts the end of the tube 76 in the region 126, and inserts the end portion of the dispensing tube up to the collar 86 in the appropriate bore in the body 108. In this connection, there is preferably provided a means whereby the armature 114 can be retracted manually against the force of spring 118 for the positioning of the tube 76 in the body 108.

The invention provides an extremely convenient and easy method for the replenishment of syrup in a post-mix dispensing system for dispensing of beverages.

Instead of the syrup and water mixing in the head and being dispensed in to a drinking vessel from the head, the syrup tube can be directed so as to extend close to the top of the drinking vessel, and the water can also be supplied through a tube which is directed into the drinking vessel so that mixing takes place in the drinking vessel and not in the head whereby the hygiene difficulties of cleaning the head are removed. The dispensing tube for the syrup is disposed of along with the package.

## Claims

1. A disposable package (50) for use in a beverage dispensing system, the package (50) containing a liquid (80), and further comprising a package outlet and a one-piece flexible tube unit (14) having one end connected to said package outlet and at the other end having a dispensing outlet, characterised in that the tube unit (14) has spaced inwardly of the ends thereof two spaced apart integral shoulders (16, 18) which define therebetween a pumping tube section (13), and which are for quick release coupling with a mounting means associated with a peristaltic pump so that said pumping section can be tensioned without the need for a reaction surface for the pump rotor.

2. A disposable package according to Claim 1 characterised in that the package containing the liquid is a flexible bag (34) which is in turn contained in an outer casing (38) of cut and creased sheet cardboard.

3. A disposable package according to Claim 2 characterised in that said flexible bag is composed of synthetic plastics material, and is completely filled with the liquid so that there are no air pockets therein.

4. A disposable package according to Claim 2, . characterised in that the said outer casing (38) is provided with lines of weakening defining a break-open portion (72) for the exposure of the dispensing tube (14) which is initially housed within the casing.

5. A disposable package according to Claim 1 characterised in that the dispensing tube (14) has a sealed end which must be cut to enable the package to be used in a dispensing machine.

6. A beverage dispensing system comprising a disposable package (50), a peristaltic pump with associated mounting means for a pumping tube section (13), and a dispensing head (94), said disposable package (50) comprising a package outlet, and a one-piece flexible tube unit (14) having one end connected to said package outlet and at the other end having a dispensing outlet connected to the dispensing head, characterised in that the tube unit (14) has spaced inwardly of the ends thereof two spaced apart integral shoulders (16, 18) which define therebetween a pumping tube section (13), and which are quick-release coupled with the mounting means (20) associated with said peristaltic pump so that said pumping section is tensioned around the pump rotor (22) with predetermined tension, and the peristaltic pump is devoid of any rotor reaction surface.

7. A dispensing system according to Claim 6 characterised in that the disposable packaging contains a beverage concentrate and the system includes a supply of carbonated water (104) coupled to the dispensing head (94) so that when actuating means (106) is actuated, the concentrate and water flow in a predetermined ratio in order to provide a beverage.

## Patentansprüche

1. Einweg-Behälter (50) zur Verwendung in einem Getränkeverteilungssystem, wobei der Behälter (50) eine Flüssigkeit (80) enthält und weiterhin einen Behälterauslaß und eine einteilige flexible Rohreinheit (14) aufweist, deren eines Ende mit dem Behälterauslaß und deren anderes Ende mit einem Verteilerauslaß verbunden ist, dadurch gekennzeichnet, daß die Rohreinheit (14) nach innen im Zwischenraum zwischen ihren Enden zwei im Abstand zueinander angeordnete einstückige Schultern (16, 18) aufweist, welche zwischen sich einen Pumprohrabschnitt (13) begrenzen, und welche zum Zwecke einer schnell lösbaren Verbindung mit einer einer peristaltischen Pumpe zugeordneten Lagereinrichtung vorgesehen sind, so daß der Pumpbereich ohne das Erfordernis einer Reaktionsfläche für den Pumpenrotor gespannt werden kann.

2. Einweg-Behälter nach Anspruch 1, dadurch gekennzeichnet, daß der die Flüssigkeit enthaltende Behälter ein flexibler Beutel (34) ist, der seinerseits in einem äußeren Gehäuse (38) aus geschlitztem und gefalztem Pappmaterial enthalten ist.

3. Einweg-Behälter nach Anspruch 2, dadurch gekennzeichnet, daß der flexible Beutel aus synthetischem Kunststoffmaterial besteht und vollständig mit der Flüssigkeit gefüllt ist, so daß keine Lufttaschen darin enthalten sind.

4. Einweg-Behälter nach Anspruch 2, dadurch gekennzeichnet, daß das äußere Gehäuse (38) mit Schwächungslinien versehen ist, die einen Aufbrechbereich (72) zum Hervorholen des Verteilerrohres (14) bestimmen, welches anfänglich innerhalb des Gehäuses angeordnet ist.

5. Einweg-Behälter nach Anspruch 1, dadurch gekennzeichnet, daß das Verteilerrohr (14) ein abgedichtetes Ende aufweist, welches eingeschnitten werden muß, um den Behälter in einer Verteilermaschine benutzen zu können.

6. Getränkeverteilungs-System mit einem Einweg-Behälter (50), einer peristaltischen Pumpe mit einer zugeordneten Lagereinrichtung für einen Pumprohrabschnitt (13) und einem Verteilerkopf (94), wobei der Einweg-Behälter (50) einen Behälterauslaß und eine einstückige, flexible Rohreinheit (14) aufweist, deren eines Ende mit dem Behälterauslaß verbunden ist und an deren anderem Ende ein Verteilerauslaß vorgesehen ist, der mit dem Verteilerkopf verbunden ist, dadurch gekennzeichnet, daß die Rohreinheit (14) zwischen ihren Enden nach innen zwei im Abstand zueinander angeordnete einstückige Schultern (16, 18) aufweist, welche zwischen sich einen Pumprohrabschnitt (13) begrenzen, und welche schnell lösbar mit der der peristaltischen Pumpe zugeordneten Lagereinrichtung (20) verbunden sind, so daß der Pumpbereich um den Pumpenrotor (22) herum mit einer vorbestimmten Spannung gespannt ist, und die peristaltische Pumpe keinerlei Rotorreaktionsfläche aufweist.

7. Verteilersystem nach Anspruch 6, dadurch gekennzeichnet, daß der Einweg-Behälter ein Getränkekonzentrat enthält und das System eine Zuführung von kohlensäurehaltigem Wasser (104) aufweist, die mit dem Verteilerkopf (94) verbunden ist, so daß bei Betätigung einer Betätigungs- einrichtung (106) das Konzentrat und das Wasser in einem vorbestimmten Verhältnis zusammenfließen, um ein Getränk zu ergeben.

## Revendications

1. Emballage jetable (50) utilisable dans un système de distribution de boisson, l'emballage (50) contenant un liquide (80), et comprenant de plus une sortie d'emballage et une unité tubulaire flexible en une pièce (14) ayant une extrémité reliée à ladite sortie d'emballage et ayant, à l'autre extrémité, une sortie de distribution, caractérisé en ce que l'unité tubulaire (14) présente, entre ses extrémités, deux épaulements (16, 18) espacés venant de matière qui définissent entre eux une section tubulaire de pompage (13), et destinés au couplage à libération rapide avec des moyens de montage associés à une pompe péristaltique, de sorte que ladite section de pompage peut être tendue sans qu'on ait besoin d'une surface de réaction pour le rotor de pompe.

2. Emballage jetable selon la revendication 1, caractérisé en ce que l'emballage contenant le liquide est un sac flexible (34) qui, à son tour, est contenu dans une enveloppe externe (38) de carton en feuille coupée et plissée.

3. Emballage jetable selon la revendication 2, caractérisé en ce que ledit sac flexible est composé d'un matériau plastique synthétique, et est complètement rempli par le liquide de sorte qu'il n'y a aucune poche d'air à l'intérieur de celui-ci.

4. Emballage jetable selon la revendication 2, caractérisé en ce que ladite enveloppe externe (38) est munie de lignes d'affaiblissement définissant une partie (72) enfoncée pour la mise à découvert du tube de distribution (14) qui est logé, initialement, à l'intérieur de l'enveloppe.

5. Emballage jetable selon la revendication 1, caractérisé en ce que le tube de distribution (14) a une extrémité scellée qui doit être coupée pour permettre à l'emballage d'être utilisé dans une machine de distribution.

6. Système de distribution de boisson comprenant un emballage jetable (50), une pompe péristaltique ayant des moyens de montage associés pour une section tubulaire de pompage (13), et une tête de distribution (94), ledit emballage jetable (50) comprenant une sortie d'emballage, et une unité tubulaire flexible en une pièce (14) ayant une extrémité reliée à ladite sortie d'emballage et ayant, à l'autre extrémité, une sortie de distribution reliée à la tête de distribution, caractérisé en ce que l'unité tubulaire (14) présente, entre ses extrémités, deux épaulements (16, 18) espacés venant de matière qui définissent entre eux une section tubulaire de pompage (13), et sont couplés, de façon rapidement libérable, aux moyens de montage (20) associés à ladite pompe péristaltique, de sorte que ladite section de pompage est tendue autour du rotor de pompe (22) par une tension prédéterminée, et que la pompe péristaltique est dépourvue de toute surface de réaction du rotor.

7. Système de distribution selon la revendication 6, caractérisé en ce que l'emballage jetable contient un concentré de boisson et le système comporte une alimentation en eau carbonatée (104) reliée à la tête de distribution (94) de sorte que, quand des moyens de commande (106) sont mis en action, le concentré et l'eau s'écoulent, dans un rapport prédéterminé, de façon à procurer une boisson.

FIG.1

FIG.2

FIG.3

FIG.4

FIG. 5

FIG. 6

FIG. 7

FIG. 8

2